# NEUE EUROPÄISCHE PATENTSCHRIFT

(11) **EP 2 160 957 B2**
(45) Veröffentlichungstag und Bekanntmachung des Hinweises auf die Entscheidung über den Einspruch: **02.08.2017**
(45) Hinweis auf die Patenterteilung: 09.07.2014
(21) Anmeldenummer: 09007279.4
(22) Anmeldetag: 17.12.2001
(51) Int. Cl.: A46B 5/02, A46D 3/00

(54) **Verfahren zur Herstellung einer Zahnbürste**
Method for producing a tooth brush
Procédé de fabrication d'une brosse à dents

(30) Priorität: 28.12.2000 DE 10065517
(43) Veröffentlichungstag der Anmeldung: 10.03.2010
(62) Teilanmeldung aus: 01272589.1
(73) Patentinhaber: Trisa Holding AG, 6234 Triengen (CH)
(72) Erfinder: Strähler, Reto, 6043 Adligenswil (CH)
(74) Vertreter: Schaad, Balass, Menzl & Partner AG

(56) Entgegenhaltungen:
- EP-A- 0 678 368
- EP-A- 0 893 225
- EP-A1- 0 742 090
- EP-A1- 0 836 923
- EP-A2- 0 721 832
- WO-A-99/01055
- WO-A1-99/62686
- DE-A1- 4 127 621
- DE-A1- 19 722 366
- DE-A1- 19 918 532
- DE-U- 9 402 418
- DE-U1- 9 103 553
- US-A- 5 761 759

## Beschreibung

Die Erfindung betrifft ein Verfahren zur Herstellung einer Zahnbürste gemäss dem Oberbegriff des Anspruches 1.

Aus der WO-A-94/05183 ist ein Verfahren zur Herstellung einer aus zwei verschiedenen Materialkomponeneten bestehenden Zahnbürste bekannt, bei dem in einem ersten Schritt der Grundkörper der Zahnbürste aus einer ersten Materialkomponente gespritzt wird, wozu eine erste Kavität vorgesehen ist. Danach wird in einer zweiten Kavität an verschiedenen Stellen des Grundkörpers eine weitere Materialkomponente, beispielsweise ein elastisches und/oder rutschsicheres Material, angespritzt. Der Grundkörper weist sowohl in seinem borstentragenden Bereich als auch in seinem Handgriffbereich einen relativ schmalen Querschnitt auf.

Ein Verfahren zur Herstellung einer Zahnbürste gemäss dem Oberbegriff von Anspruch 1 ist aus dem Dokument DE 94 02 418 U bekannt.

Um die Griffigkeit von Zahnbürsten zu verbessern und eine bequeme Handhabung zu ermöglichen, ist es von Vorteil, die Zahnbürste in ihrem Handgriffbereich relativ massiv auszubilden, d.h. dem Handgriff einen relativ grossen Querschnitt zu erteilen. Eine derartige Handgriff-Ausbildung bringt jedoch herstellungstechnisch einige Nachteile mit sich. Nicht nur der Materialaufwand ist durch das grössere Handgriffvolumen grösser; durch die grössere Masse wird auch die Einspritz- und Kühlzeit massiv erhöht und dadurch der Spritzgiessprozess verlängert (höhere Standzeit). Zudem neigen solche Handgriffteile mit einem relativ grossen Querschnitt zu einer Lunkerbildung (d.h. Bildung von Lufteinschlüssen), die bei Handgriffen aus einem transparenten Material sichtbar sind und die ästhetische Zahnbürste beeinträchtigen.

Der vorliegenden Erfindung liegt die Aufgabe zugrunde, ein Verfahren der eingangs genannten Art vorzuschlagen, das bei Herstellung einer Zahnbürste mit einem im Querschnitt grossen, massiven Handgriff kurze Spritzintervalle gewährleistet.

Diese Aufgabe wird erfindungsgemäss durch ein Verfahren mit den Merkmalen der Ansprüche 1 und 2 gelöst.

Die Erfindung wird im folgenden anhand der Zeichnung näher erläutert.

In der Zeichnung sind drei Varianten des Verfahren dargestellt und im folgenden näher beschrieben.

Es zeigen rein schematisch:
- Fig. 1 bis 3: eine nicht erfindungsgemässe erste Verfahrensvariante in drei Schritten;
- Fig. 4: in Seitenansicht und teilweise im Schnitt eine Zahnbürste hergestellt nach den Verfahrensschritten gemäss Fig. 1 bis 3;
- Fig. 5: in Draufsicht einen Teil einer Spritzgussform für die erste Verfahrensvariante;
- Fig. 6 und 7: eine zweite Verfahrensvariante in zwei Schritten;
- Fig. 8: in Seitenansicht und teilweise im Schnitt eine Zahnbürste hergestellt nach den Verfahrensschritten gemäss Fig. 6 und 7;
- Fig. 9: in Draufsicht einen Teil einer Spritzgussform für die zweite Verfahrensvariante; und
- Fig. 10: in Draufsicht einen Teil einer Spritzgussform für eine dritte, nicht erfindungsgemässe, Verfahrensvariante.

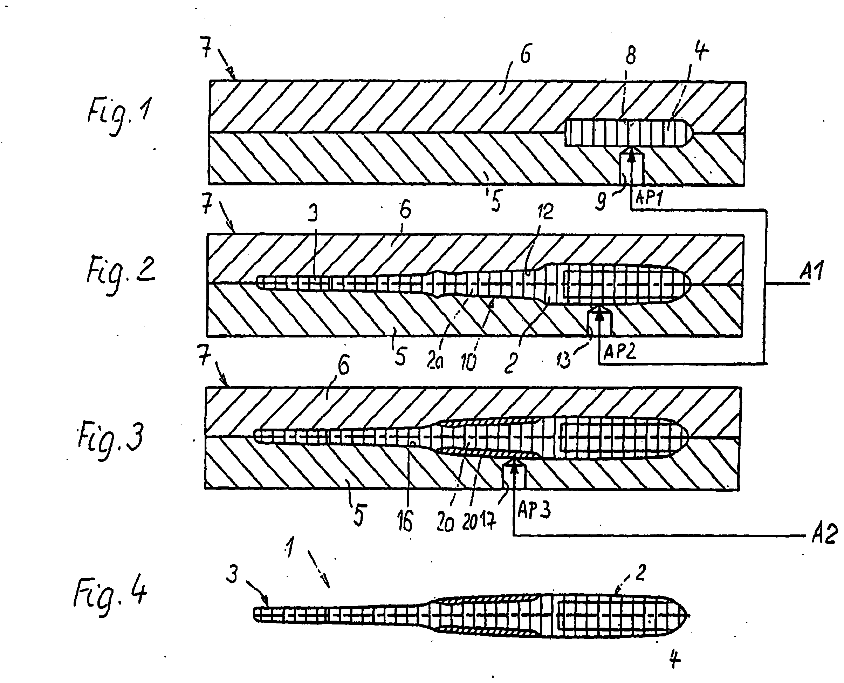

Zur Herstellung einer aus Fig. 4 ersichtlichen Zahnbürste 1, deren Handgriff 2 einen grösseren Querschnitt aufweist, als der zur Befestigung von Borsten bzw. Borstenbüscheln vorgesehene vordere Kopfteil 3, wird in einem ersten, in Fig. 1 dargestellten Schritt zuerst ein Innenteil 4 des Handgriffes 2 angefertigt. Zu diesem Zweck wird eine erste Portion der für den Handgriff 2 - und gegebenenfalls auch für den Kopfteil 3 - vorgesehenen ersten Materialkomponente in eine zwischen zwei Teilen 5, 6 einer Spritzgussform 7 gebildete erste Kavität 8 gespritzt. Der erste Anspritzpunkt für die von einem ersten Aggregat A1 zugeführte erste Materialkomponenete ist in Fig. 1 mit AP1 bezeichnet, der dafür vorgesehene Einspritzkanal bzw. Einspritzdüse mit 9.

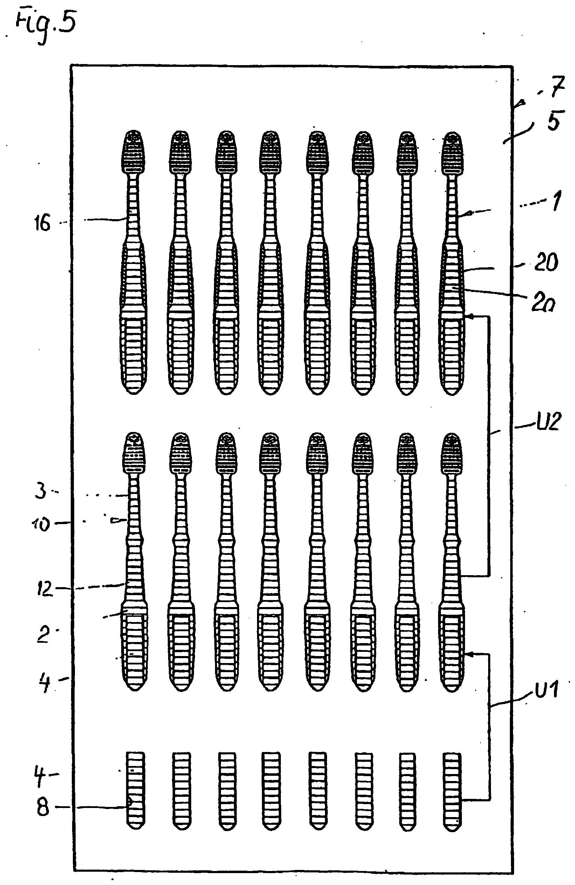

Wie aus Fig. 5 ersichtlich ist die Spritzgussform 7 für die Herstellung von mehreren, gegebenenfalls acht Zahnbürsten 1 vorgesehen. Die im ersten Schritt nach Fig. 1 gespritzten Innenteile 4 werden nach teilweisem Auskühlen und Aushärten - sobald genügende Eigenstabilität erreicht ist - mittels eines in der Zeichnung nicht dargestellten allgemein bekannten Übergabesystems, beispielsweise einem sogenannten internen, am Spritzwerkzeug angeordneten Handlingsystem, einem externen rotativen oder linearen Handlingsystem oder Roboter, jeweils in eine zweite, aus Fig. 2 ersichtliche Kavität 12 umgelegt. Diese erste Umlegung ist in Fig. 5 mit einem Pfeil U1 symbolisch angedeutet.

Der Innenteil 4 kann in radialer Richtung vorstehende Abstütznoppen aufweisen - in der Fig. 1 nicht gezeigt - mittels welchen das Innenteil 4 sich an der Wand der zweiten Kavität 12 abstützt, um dort zentrisch gehalten zu sein.

In einem zweiten, in Fig. 2 dargestellten Schritt wird eine zweite, gegebenenfalls restliche Portion der ersten Materialkomponenete in die zweite Kavität 12 über einen Einspritzkanal bzw. eine Einspritzdüse 13 eingespritzt. Der zweite Anspritzpunkt AP2 für die erste Kunststoffkomponenete ist gegenüber dem ersten Anspritzpunkt AP1 - in Längsrichtung der herzustellenden Zahnbürste gesehen - versetzt. Die zweite Portion der ersten Materialkomponente kommt in einen direkten Kontakt mit der ersten Portion; beim dargestellten Ausführungsbeispiel wird der Innenteil 4 umspritzt, der Handgriff 2 erhält in seinem hinteren Bereich die gewünschte, massive Form, und es entsteht auch der im Querschnitt schmalere vordere Kopfteil 3. Somit wird ein Grundkörper der Zahnbürste 1 gebildet, der aus der ersten Materialkomponenete besteht, und in Fig. 2 und 5 mit 10 bezeichnet ist. Für die Einspritzung beider Portionen der ersten Materialkomponenete wird vorzugsweise nur ein Aggregat A1 verwendet, wie in Fig. 1 und 2 angedeutet. Allerdings könnten die beiden Portionen des gleichen Materials auch aus zwei verschiedenen Aggregaten eingespritzt werden, und beispielsweise unterschiedliche Farben aufweisen.

Bei der Verfahrensvariante nach Fig. 1 bis 5 wird schliesslich in einem dritten Schritt der Handgriff 2 in seinem vorderen Bereich zusätzlich mit einer weiteren Materialkomponenete, beispielsweise einem im Vergleich zu der ersten Materialkomponenete elastisch nachgiebigeren Material, z.B. einem thermoplastischen Elastomer (TPE), umspritzt. Zu diesem Zweck wird der aus der ersten Materialkomponenete bestehende Grundkörper 10 nach dem Auskühlen bzw. Aushärten der zweiten Portion in eine dritte Kavität 16 der Spritzgussform 7 umgelegt, wobei wiederum die in Fig. 5 mit Pfeil U2 angedeutete zweite Umlegung aller acht Grundkörper 10 mittels eines nicht dargestellten Saugwerkzeuges erfolgt.

Gemäss Fig. 3 wird in die dritte Kavität 16 von einem weiteren Aggregat A2 über einen Einspritzkanal bzw. eine Einspritzdüse 17 die zweite Materialkomponenete in einem dritten Anspritzpunkt AP3 eingespritzt, wobei ein vorderer Teil 2a (Fig. 2 und 3) des Handgriffes 2 umspritzt und somit eine Art Mantel über einen Teil der Handgrifflänge gebildet wird. Ein solcher Griffteil 20 kann beispielsweise zur weiteren Verbesserung der Griffigkeit der Zahnbürste 1 beitragen. Selbstverständlich ist es möglich, weitere Materialkomponenten in weiteren Kavitäten hinzuzufügen.

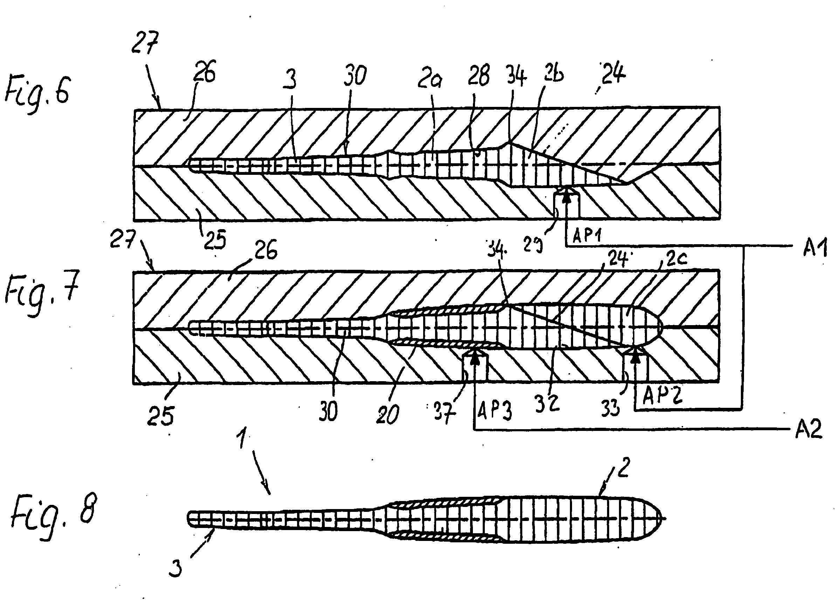

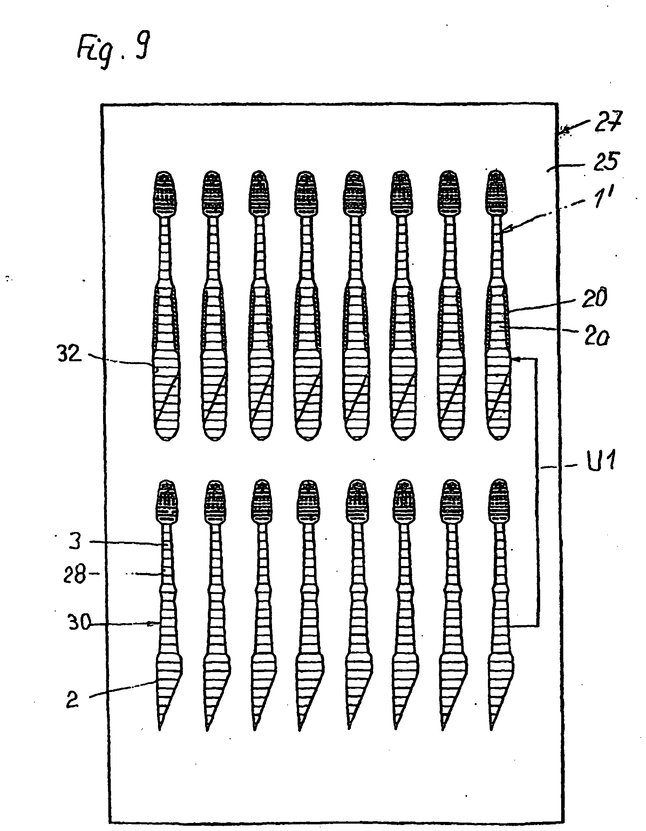

In Fig. 6, 7 und 9 ist eine weitere Verfahrensvariante zur Herstellung einer aus Fig. 8 ersichtlichen Zahnbürste 1' dargestellt, die wiederum einen vorderen Kopfteil 3 und einen diesem gegenüber im Querschnitt grösseren Handgriff 2 aufweist. Bei dieser Variante wird gemäss Fig. 6 in einem ersten Schritt der Kopfteil 3, ein vorderer Teil 2a des Handgriffes 2 sowie ein Teil 2b des im Querschnitt vergrösserten, hinteren Handgriffteils aus einer ersten Materialkomponenete gespritzt, die zusammen einen Grundkörper 30 der Zahnbürste 1' bilden. Die dafür vorgesehene, zwischen zwei Teilen 25, 26 einer Spritzgussform 27 gebildete erste Kavität ist in Fig. 6 mit 28 bezeichnet. Diese erste Kavität 28 ist so ausgebildet, dass der Teil 2b des Handgriffes 2 eine zur Längsrichtung der herzustellenden Zahnbürste 1' schräg verlaufende, obere Anspritzfläche 24 erhält; selbstverständlich könnte die Anspritzfläche 24 in eine andere Richtung verlaufen. In einem Anspritzpunkt AP1 wird über einen Einspritzkanal bzw. Einspritzdüse 29 eine erste Portion der ersten Materialkomponenete aus einem ersten Aggregat A1 in die erste Kavität 28 gespritzt. Wie aus Fig. 9 ersichtlich werden wiederum mehrere, gegebenenfalls acht Grundkörper 30 in einer Spritzgussform 27 hergestellt und nach teilweisem Auskühlen bzw. Aushärten mittels eines nicht dargestellten Übergabesystems in eine zweite, in Fig. 2 dargestellte Kavität 32 umgelegt. Diese Umlegung ist in Fig. 9 mit einem Pfeil U1 angedeutet.

In einem zweiten, in Fig. 7 dargestellten Schritt wird in die zweite Kavität 32 in einem hinteren zweiten Anspritzpunkt AP2, der hinter der Anspritzfläche 24 des sich in der Kavität 32 befindenden Grundkörpers 30 liegt, über einen Einspritzkanal bzw. eine Einspritzdüse 33 die zweite, restliche Portion der ersten Materialkomponenete eingespritzt - vorzugsweise aus dem gleichen Aggregat A1 wie die erste Portion. Auch hier könnte allerdings ein zusätzliches Aggregat für die zweite Portion zur Verfügung stehen. Durch die zweite, an die Anspritzfläche 24 des ausgekühlten Handgriffteiles 2b aufgespritzte Portion der ersten Materialkomponenete wird der restliche Teil 2c (Fig. 7) des Handgriffes 2 gebildet. Bei dieser Variante ist der Grundkörper 30 so ausgebildet, dass der für die Einspritzung dieser zweiten Portion (bzw. zur Bildung des restlichen Handgriff-Teiles 2c) vorgesehene Raum der zweiten Kavität 32 durch eine Umfangsfläche 34 des eingelegten Grundkörpers 30, die sich am Übergang zwischen dem vorderen Teil 2a und dem mit der Anspritzfläche 24 versehenen Teil 2b des Handgriffes 2 befindet, von einem für die Einspritzung einer zweiten, den vorderen Handgriffteil 2a umgebenden zweiten Materialkomponente vorgesehenen Raum der zweiten Kavität 32 getrennt ist. Somit kann gleichzeitig mit der Einspritzung der zweiten, restlichen Portion der ersten Materialkomponenete auch die Einspritzung der zweiten Materialkomponenete stattfinden, und zwar von einem weiteren Aggregat A2, in einem dritten Anspritzpunkt AP3, über einen in die zweite Kavität 32 mündenden Einspritzkanal (bzw. Eispritzdüse) 37. Auch hier wird dabei der Handgriff 2 zur Verbesserung der Griffigkeit mit dem beispielsweise aus einer elastisch nachgiebigeren Materialkomponente bestehenden Griffteil 20 ausgestattet. Falls notwendig, könnte die Einspritzung der ersten und zweiten Materialkomponente sequentiell erfolgen.

Bei der zweiten Verfahrensvariante nach Fig. 6, 7 und 9 sind demnach (im Gegensatz zu der ersten Variante nach Fig. 1 bis 3 und 5) für jede Zahnbürste 1' nur zwei Kavitäten 28, 32 notwendig, und es bedarf nur einer einzigen Umlegung U1.

Sowohl bei der ersten als auch bei der zweiten Verfahrensvariante wird durch die Aufteilung des Spritzgiessens vom im Querschnitt verdickten Handgriff 2 in zwei Arbeitsgänge, d. h. durch Spritzgiessen des gleichen Materials in zwei Portionen, die Einspritz- und die Kühlzeit wesentlich verkürzt, d. h. es werden kürzere Spritzintervalle ermöglicht, und zusätzlich wird die Bildung von Lunkern vermindert. Der letztgenannte Vorteil ist besonders bei transparenten oder transluzenten Handgriffen von Bedeutung. Die Trennlinien bzw. bei transparentem Material die Trennflächen zwischen den in den einzelnen Portionen gespritzten Handgriffteilen sind kaum sichtbar. Selbstverständlich könnten diese Handgriffteile (und die dazu benötigte Kavitäten) in ihrer Form auch anders ausgestaltet sein, als bei den Ausführungsbeispielen nach Fig. 1 bis 5 und 6 bis 9 dargestellt und beschrieben. Es wäre auch durchaus möglich, den im Querschnitt verdickten Handgriff in mehr als zwei Portionen zu spritzen, und dabei für jede weitere Portion eine zusätzliche Kavität vorzusehen.

Anhand der Fig. 1 bis 5 und 6 bis 9 wurde jeweils die Herstellung einer Zweikomponenten-Zahnbürste 1 bzw. 1' beschrieben. Selbstverständlich könnte auch eine Einkomponenten-Zahnbürste, d.h aus einer einzigen Materialkomponente bestehende Zahnbürste erfindungsgemäss in zwei oder mehreren Portionen gespritzt werden.

Eine Zweikomponenten-Zahnbürste könnte auch durchaus anders ausgestaltet sein als in Fig. 4 oder 8 dargestellt. Beispielsweise könnte der Kopfteil 3 aus einer anderen Materialkomponente bestehen, als der Handgriff 2. In diesem Fall könnte die zur Herstellung des gegenüber dem Kopfteil 3 verdickten Handgriffes 2 vorgesehene Materialkomponente mit Vorteil in zwei etwa gleich grossen Portionen gespritzt werden.

Bei einer Mehrkomponenten-Zahnbürste können aber auch mehrere Materialkomponenten erfindungsgemäss in zwei oder mehrere Portionen, die sequentiell gespritzt werden, aufgeteilt werden. Pro Komponente, welche aufgeteilt wird, ist natürlich mit einer zusätzlichen Kavität pro Portion zu rechnen.

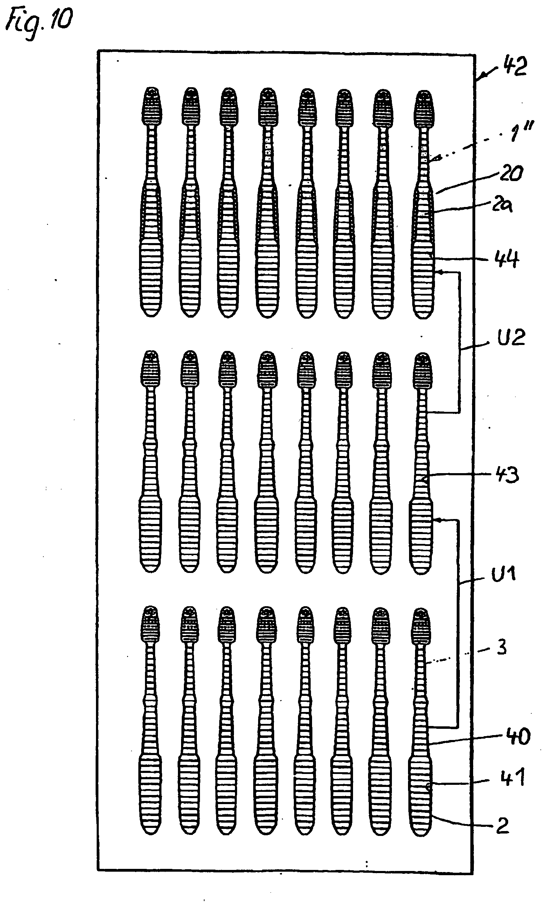

Eine weitere Verfahrensvariante zur Herstellung einer Zahnbürste, gegebenenfalls wiederum einer Zweikomponenten-Zahnbürste 1", ist in Fig. 10 angedeutet. In einem ersten Schritt wird ein Grundkörper 40 dieser Zahnbürste 1", der einen Kopfteil 3 sowie einen im Querschnitt vergrösserten Handgriff 2 aufweist, durch Spritzgiessen einer ersten Materialkomponente in eine erste Kavität 41 einer Spritzgussform 42 hergestellt, wobei bei dieser Variante die erste Materialkomponente vollständig in die erste Kavität 41 eingespritzt wird. Danach wird - sobald genügende Eigenstabilität nach teilweisem Auskühlen und Aushärten erreicht ist - der Grundkörper 40 mittels eines nicht dargestellten Saugwerkzeuges in eine Kühlkavität 43 umgelegt, was in Fig. 10 mit einem Pfeil U1 bezeichnet ist. In der Kühlkavität 43, die mit keinem Anspritzpunkt bzw. keinem Einspritzkanal ausgestattet ist, erfolgt eine wieitere Auskühlung und Aushärtung des Grundkörpers 40, insbesondere dessen massiven Handgriffes 2, bis keine Gefahr einer Verformung besteht, wenn in einem weiteren Schritt der Grundkörper 40 in eine weitere Kavität 44 umgelegt wird (vgl. Pfeil U2 in Fig. 10), in die eine zweite, beispielsweise elastisch nachgiebigere Materialkomponente zur Bildung des Griffteiles 20 gespritzt wird. Auch diese Variante ermöglicht durch die Umlegung U1 des Grundkörpers 40 in die Kühlkavität 43 kurze Spritzintervalle.

Fig. 10 zeigt wiederum als Beispiel eine zur gleichzeitigen Herstellung von 8 Zahnbürsten vorgesehene Spritzgussform 42. Selbstverständlich sind bei allen Varianten auch andere Formgrössen mit einer anderen Anzahl von Kavitäten denkbar (z.B. mit je 16 oder je 24 Kavitäten pro Arbeitsschritt).

Als geeignete Materialkomponenten können die verschiedensten Kunststoffe eingesetzt werden, wobei es sich um mindestens teilweise transparente Materialien handeln kann, wie beispielsweise Styrol-Acryl-Nitril, Polyester, Polystyrol, Polyamide, Polycarbonate, Polymethylmethacrylat oder andere. Als opake Materialien können als Beispiel Polypropylen, thermoplastische Elastomere oder Polyethylen genannt werden.

Hiermit ist auch ein Verfahren zur Herstellung einer Zahnbürste aus mindestens einer Materialkomponente offenbart, umfassend das Spritzgiessen der Materialkomponente in eine Kavität einer Spritzgussform, wobei entweder nur eine Portion der zur Bildung des Handgriffes vorgesehenen Materialkomponente in eine erste Kavität gespritzt wird und der restliche Teil dieser Materialkomponente in einer oder mehreren weiteren Portionen in jeweils eine weitere Kavität gespritzt und dabei in Verbindung mit mindestens einer der bereits gespritzten Portionen gebracht wird, oder die in die erste Kavität vollständig gespritzte Materialkomponente anschliessend in eine Kühlkavität zur Kühlung und Aushärtung umgelegt wird.

Auf dieses Verfahren beziehen sich die nachfolgenden bevorzugten Ausführungsformen.

Dabei kann vorzugsweise die zum Spritzgiessen in zwei oder mehreren Portionen vorgesehene Materialkomponente den einzelnen Kavitäten vom gleichen Aggregat zugeführt werden.

Weiter kann die zum Spritzgiessen in zwei oder mehreren Portionen vorgesehene Materialkomponente den einzelnen Kavitäten von verschiedenen Aggregaten zugeführt werden, wobei die einzelnen Portionen der zur Bildung des Handgriffes vorgesehenen Materialkomponente unterschiedliche Farben aufweisen können.

Es kann auch beim Spritzgiessen einer zweiten Portion der zur Bildung des Handgriffes vorgesehene Materialkomponente in eine zweite Kavität ein aus der ersten Portion dieser Materialkomponente gespritzter Teil umspritzt werden.

Im Weiteren kann beim Spritzgiessen einer zweiten Portion der zur Bildung des Handgriffes vorgesehenen Materialkomponente diese in eine zweite Kavität an eine Anspritzfläche eines aus der ersten Portion dieser Materialkomponente gespritzten Teiles aufgespritzt werden.

Es ist auch möglich beim Spritzgiessen einer zweiten Portion der zur Bildung des Handgriffes vorgesehenen Materialkomponente gleichzeitig eine zweite Materialkomponente in die zweite Kavität zu spritzen, wobei der für die zweite Portion der ersten Materialkomponente vorgesehene Teil der zweiten Kavität von dem für die zweite Materialkomponente vorgesehenen Teil dieser Kavität durch den in der ersten Portion bzw. in der ersten Kavität hergestellten Teil getrennt ist.

Weiter kann die zur die zur Bildung des Handgriffes vorgesehene Materialkomponente in zwei etwa gleich grossen Portionen gespritzt werden.

Es ist auch denkbar mindestens eine Portion der zur Bildung des Handgriffes vorgesehenen Materialkomponente wenigstens teilweise transparent oder transluzent auszubilden.

Es ist auch denkbar in einer Spritzgussform gleichzeitig eine Anzahl von Zahnbürsten in einer entsprechenden Anzahl von Kavitäten herzustellen.

## Patentansprüche

1. Verfahren zur Herstellung einer Zahnbürste aus mindestens einer Materialkomponente mittels Spritzgiessen, bei dem aus einem ersten Aggregat (A1) eine erste Portion einer ersten Materialkomponente in eine erste Kavität (28) einer Spritzgussform (27) gespritzt wird und aus einem zusätzlichen Aggregat der restliche Teil der ersten Materialkomponente in einer zweiten, restlichen Portion in eine zweite Kavität (32) der Spritzgussform (27) gespritzt und dabei in Verbindung mit der bereits gespritzten Portion gebracht wird, **dadurch gekennzeichnet, dass** in einem ersten Schritt ein Kopfteil (3), ein vorderer Teil (2a) eines Handgriffs (2) sowie ein Teil (2b) eines hinteren Handgriffteils, welche zusammen einen Grundkörper (30) der Zahnbürste bilden, aus der ersten Portion der ersten Materialkomponente gespritzt werden, wobei der Handgriff gegenüber dem Kopfteil im Querschnitt grösser ist, in einem zweiten Schritt die zweite, restliche Portion der ersten Materialkomponente zur Bildung des restlichen Teils (2c) des hinteren Handgriffteils eingespritzt wird und der vordere Teil (2a) des Handgriffs (2) durch Einspritzen einer zweiten Materialkomponente, welche aus einem im Vergleich zu der ersten Materialkomponente elastisch nachgiebigeren Material besteht, mit einem elastisch nachgiebigerem Griffteil (20) ausgestattet wird, wobei die zur Bildung des Handgriffs (2) vorgesehene Materialkomponente in zwei etwa gleich grossen Portionen gespritzt wird, wobei die Einspritzung der zweiten, restlichen Portion der ersten Materialkomponente und der zweiten Materialkomponente in die zweite Kavität (32) sequentiell erfolgt, wobei der für die zweite, restliche Portion der ersten Materialkomponente vorgesehene Teil der zweiten Kavität (32) von dem für die zweite Materialkomponente vorgesehenen Teil dieser Kavität (32) durch den in der ersten Portion beziehungsweise in der ersten Kavität (28) hergestellten Grundkörper (30) getrennt wird.

2. Verfahren zur Herstellung einer Zahnbürste aus mindestens einer Materialkomponente mittels Spritzgiessen, bei dem aus einem ersten Aggregat (A1) eine erste Portion einer ersten Materialkomponente in eine erste Kavität (28) einer Spritzgussform (27) gespritzt wird und aus einem zusätzlichen Aggregat der restliche Teil der ersten Materialkomponente in einer zweiten, restlichen Portion in eine zweite Kavität (32) der Spritzgussform (27) gespritzt und dabei in Verbindung mit der bereits gespritzten Portion gebracht wird, **dadurch gekennzeichnet, dass** in einem ersten Schritt ein Kopfteil (3), ein vorderer Teil (2a) eines Handgriffs (2) sowie ein Teil (2b) eines hinteren Handgriffteils, welche zusammen einen Grundkörper (30) der Zahnbürste bilden, aus der ersten Portion der ersten Materialkomponente gespritzt werden, wobei der Handgriff gegenüber dem Kopfteil im Querschnitt grösser ist, in einem zweiten Schritt die zweite, restliche Portion der ersten Materialkomponente zur Bildung des restlichen Teils (2c) des hinteren Handgriffteils eingespritzt wird und der vordere Teil (2a) des Handgriffs (2) durch Einspritzen einer zweiten Materialkomponente, welche aus einem im Vergleich zu der ersten Materialkomponente elastisch nachgiebigeren Material besteht, mit einem elastisch nachgiebigerem Griffteil (20) ausgestattet wird, wobei die zur Bildung des Handgriffs (2) vorgesehene Materialkomponente in zwei etwa gleich grossen Portionen gespritzt wird, wobei beim Spritzgiessen der zweiten, restlichen Portion der ersten Materialkomponente gleichzeitig die zweite Materialkomponente in die zweite Kavität (32) gespritzt wird, wobei der für die zweite, restliche Portion der ersten Materialkomponente vorgesehene Teil der zweiten Kavität (32) von dem für die zweite Materialkomponente vorgesehenen Teil dieser Kavität (32) durch den in der ersten Portion beziehungsweise in der ersten Kavität (28) hergestellten Grundkörper (30) getrennt wird.

3. Verfahren nach Anspruch 1 oder 2, **dadurch gekennzeichnet, dass** im ersten Schritt ein Teil (20) des im Querschnitt vergrösserten hinteren Handgriffteils gespritzt wird.

4. Verfahren nach einem der Ansprüche 1 bis 3, **dadurch gekennzeichnet, dass** mindestens eine Portion der zur Bildung des Handgriffs (2) vorgesehenen Materialkomponente wenigstens teilweise transparent oder transluzent ist.

5. Verfahren nach einem der. Ansprüche 1 bis 4, **dadurch gekennzeichnet, dass** die einzelnen Portionen der zur Bildung des Handgriffs (2) vorgesehenen Materialkomponente unterschiedliche Farben aufweisen.

6. Verfahren nach einem der Ansprüche 1 bis 5, **dadurch gekennzeichnet, dass** in der Spritzgussform (27) gleichzeitig eine Anzahl von Zahnbürsten (1, 1', 1") in einer entsprechenden Anzahl von Kavitäten (28, 32) hergestellt wird.

7. Verfahren nach einem der Ansprüche 1 bis 6, **dadurch gekennzeichnet, dass** der Grundkörper (30) mittels eines Übergabesystems in die zweite Kavität (32) umgelegt wird, welches als internes, am Spritzwerkzeug angeordnetes Handlingsystem, als externes rotatives oder lineares Handlingsystem oder als Roboter ausgebildet ist.

8. Verfahren nach einem der Ansprüche 1 bis 7, **dadurch gekennzeichnet, dass** die Portionen der Materialkomponente durch, in Längsrichtung der Zahnbürste, versetzt angeordnete Anspritzpunkte eingespritzt werden.

## Claims

1. Method for producing a toothbrush from at least one material component by means of injection moulding, in which, from a first assembly (A1), a first portion of a first material component is injected into a first cavity (28) of an injection mould (27) and, from an additional assembly, the remaining part of the first material component is injected in a second remaining portion into a second cavity (32) of the injection mould (27) and is at the same time brought into connection with the already injected portion, **characterized in that** in a first step, a head part (3), a front part (2a) of a handle (2) and a part (2b) of a rear handle part, which together form a basic body (30) of the toothbrush, are injection-moulded from the first portion of the first material component, the handle part being larger in the cross section compared to the head part, and in a second step the second remaining portion of the first material component is injection-moulded to form the remaining part (2c) of the rear handle part, and the front part (2a) of the handle (2) is equipped with a more elastically flexible grip part (20) by the injection of a second material component, the material component provided for forming the handle (2) being injected in two portions of approximately identical size, the injection into the second cavity (32) of the second, remaining portion of the first material component and of the second material component taking place sequentially, that part of the second cavity (32) which is provided for the second portion of the material component being separated from that part of this cavity (32) which is provided for the second material component by the basic body (30) produced in the first portion or in the first cavity (28).

2. Method for producing a toothbrush from at least one material component by means of injection moulding, in which, from a first assembly (A1), a first portion of a first material component is injected into a first cavity (28) of an injection mould (27) and, from an additional assembly, the remaining part of the first material component is injected in a second remaining portion into a second cavity (32) of the injection mould (27) and is at the same time brought into connection with the already injected portion, **characterized in that** in a first step, a head part (3), a front part (2a) of a handle (2) and a part (2b) of a rear handle part, which together form a basic body (30) of the toothbrush, are injection-moulded from the first portion of the first material component, the handle part being larger in the cross section compared to the head part, and in a second step the second remaining portion is injection-moulded to form the remaining part (2c) of the rear handle part, and the front part (2a) of the handle (2) is equipped with a more elastically flexible grip part (20) by the injection of a second material component which consists of a more elastically flexible material in comparison with the first material component, the material component provided for forming the handle (2) being injected in two portions of approximately identical size, during the injection-moulding of the second remaining portion of the first material component, the second material component being simultaneously injected into the second cavity (32), that part of the second cavity (32) which is provided for the second remaining portion of the first material component being separated from that part of this cavity (32) which is provided for the second material component by the basic body (30) produced in the first portion or in the first cavity (28).

3. Method according to Claim 1 or 2, **characterized in that**, in the first step, a part (20) of the rear handle part of enlarged cross section is injection-moulded.

4. Method according to one of Claims 1 to 3, **characterized in that** at least one portion of the material component provided for forming the handle (2) is at least partially transparent or translucent.

5. Method according to one of Claims 1 to 4, **characterized in that** the individual portions of the material component provided for forming the handle (2) have different colours.

6. Method according to one of Claims 1 to 5, **characterized in that** a number of toothbrushes (1, 1', 1") are produced simultaneously in the injection mould (27) in a corresponding number of cavities (28, 32).

7. Method according to one of Claims 1 to 6, **characterized in that** the basic body (30) is transferred into the second cavity (32) by means of a transfer system which is designed as an internal handling system arranged on the injection-moulding die, as an external rotary or linear handling system or as a robot.

8. Method according to one of Claims 1 to 7, **characterized in that** the portions of the material component are injected through injection points arranged so as to be offset in the longitudinal direction of the toothbrush.

## Revendications

1. Procédé de fabrication d'une brosse à dents à partir d'au moins un composant de matériau au moyen d'un moulage par injection, dans lequel une première portion d'un premier composant de matériau est pulvérisée à partir d'un premier agrégat (A1) dans une première cavité (28) d'un moule de moulage par injection (27) et la partie restante du premier composant de matériau est pulvérisée à partir d'un agrégat additionnel dans une deuxième portion restante dans une deuxième cavité (32) du moule de moulage par injection (27) et en l'occurrence est amenée en liaison avec la portion déjà pulvérisée, **caractérisé en ce que** dans une première étape, une partie de tête (3), une partie avant (2a) d'un manche (2) ainsi qu'une partie (2b) d'une partie de manche arrière, qui ensemble, forment un corps de base (30) de la brosse à dents, sont pulvérisées à partir de la première portion du premier composant de matériau, le manche étant plus grand en section transversale par rapport à la partie de tête, dans une deuxième étape, la deuxième portion restante du premier composant de matériau est pulvérisée pour former la partie restante (2c) de la partie de manche arrière et la partie avant (2a) du manche (2), par pulvérisation d'un deuxième composant de matériau, lequel est constitué d'un matériau plus flexible élastiquement en comparaison avec le premier composant de matériau, est munie d'une partie de préhension (20) plus flexible élastiquement, le composant de matériau prévu pour former le manche (2) étant pulvérisé en deux portions ayant approximativement la même taille, l'injection de la deuxième portion restante du premier composant de matériau et du deuxième composant de matériau dans la deuxième cavité (32) ayant lieu de manière séquentielle, la partie de la deuxième cavité (32) prévue pour la deuxième portion restante du premier composant de matériau étant séparée de la partie de cette cavité (32) prévue pour le deuxième composant de matériau par le corps de base (30) fabriqué dans la première portion, respectivement dans la première cavité (28).

2. Procédé de fabrication d'une brosse à dents à partir d'au moins un composant de matériau au moyen d'un moulage par injection, dans lequel une première portion d'un premier composant de matériau est pulvérisée à partir d'un premier agrégat (A1) dans une première cavité (28) d'un moule de moulage par injection (27) et la partie restante du premier composant de matériau est pulvérisée à partir d'un agrégat additionnel dans une deuxième portion restante dans une deuxième cavité (32) du moule de moulage par injection (27) et en l'occurrence est amenée en liaison avec la portion déjà pulvérisée, **caractérisé en ce que** dans une première étape, une partie de tête (3), une partie avant (2a) d'un manche (2) ainsi qu'une partie (2b) d'une partie de manche arrière, qui ensemble, forment un corps de base (30) de la brosse à dents, sont pulvérisées à partir de la première portion du premier composant de matériau, le manche étant plus grand en section transversale par rapport à la partie de tête, dans une deuxième étape, la deuxième portion restante du premier composant de matériau est pulvérisée pour former la partie restante (2c) de la partie de manche arrière et la partie avant (2a) du manche (2), par pulvérisation d'un deuxième composant de matériau, lequel est constitué d'un matériau plus flexible élastiquement en comparaison avec le premier composant de matériau, est munie d'une partie de préhension (20) plus flexible élastiquement, le composant de matériau prévu pour former le manche (2) étant pulvérisé en deux portions ayant approximativement la même taille, lors du moulage par injection de la deuxième portion restante du premier composant de matériau, le deuxième composant de matériau étant simultanément pulvérisé dans la deuxième cavité (32), la partie de la deuxième cavité (32) prévue pour la deuxième portion restante du premier composant de matériau étant séparée de la partie de cette cavité (32) prévue pour le deuxième composant de matériau par le corps de base (30) fabriqué dans la première portion respectivement dans la première cavité (28).

3. Procédé selon la revendication 1 ou 2, **caractérisé en ce que** dans la première étape, une partie (20) de la partie de manche arrière, agrandie en section transversale, est pulvérisée.

4. Procédé selon l'une quelconque des revendications 1 à 3, **caractérisé en ce qu'**au moins une portion du composant de matériau prévu pour former le manche (2) est au moins en partie transparente ou translucide.

5. Procédé selon l'une quelconque des revendications 1 à 4, **caractérisé en ce que** les portions individuelles du composant de matériau prévu pour former le manche (2) présentent des couleurs différentes.

6. Procédé selon l'une quelconque des revendications 1 à 5, **caractérisé en ce que** dans le moule de moulage par injection (27) est fabriqué simultanément un certain nombre de brosses à dents (1, 1', 1") dans un nombre correspondant de cavités (28, 32).

7. Procédé selon l'une quelconque des revendications 1 à 6, **caractérisé en ce que** le corps de base (30) est placé au moyen d'un système de transfert dans la deuxième cavité (32), lequel système de transfert est réalisé sous forme de système de manipulation interne disposé sur l'outil de pulvérisation, sous forme de système de manipulation externe rotatif ou linéaire, ou sous forme de robot.

8. Procédé selon l'une quelconque des revendications 1 à 7, **caractérisé en ce que** les portions du composant de matériau sont injectées à travers des points d'injection disposés de manière décalée dans la direction longitudinale de la brosse à dents.
